# EUROPÄISCHE PATENTSCHRIFT

(11) **EP 2 976 388 B1**
(45) Veröffentlichungstag und Bekanntmachung des Hinweises auf die Patenterteilung: **18.10.2017**
(21) Anmeldenummer: 14709696.0
(22) Anmeldetag: 13.03.2014
(51) Int. Cl.: C08L 25/12, C08L 51/04, C08L 51/00

(54) **MATTE WITTERUNGSBESTÄNDIGE FORMMASSEN FÜR EXTRUSIONSVERFAHREN**
MATT WEATHER-RESISTANT MOLDING MASSES FOR EXTRUSION METHODS
MATIÈRES MOULABLES MATTES RÉSISTANT AUX INTEMPÉRIES POUR PROCÉDÉ D'EXTRUSION

(30) Priorität: 19.03.2013 EP 13159855
(43) Veröffentlichungstag der Anmeldung: 27.01.2016
(73) Patentinhaber: INEOS Styrolution Group GmbH, 60325 Frankfurt (DE)
(72) Erfinder: ABBOUD, Mohammed, Riverside, IL 60546 (US); MINKWITZ, Rolf, 68167 Mannheim (DE); SUWIER, Davy Roger, 68161 Mannheim (DE); BÖCKMANN, Philipp, 67098 Bad Dürkheim (DE); HAUßER, Hans-Jürgen, 67659 Kaiserslautern (DE)
(74) Vertreter: Jacobi, Markus Alexander
(86) Internationale Anmeldenummer: PCT/EP2014/054979
(87) Internationale Veröffentlichungsnummer: WO 2014/146970

(56) Entgegenhaltungen:
- DE-A1- 2 826 925
- US-A1- 2006 148 992

## Beschreibung

Die vorliegende Erfindung betrifft thermoplastische Formmassen, enthaltend mindestens ein Styrol-Copolymer und schlagzäh-modifizierende Propfkautschuke (ohne olefinische Doppelbindung in der Kautschukphase). Diese Formmassen sind matt und besonders witterungsbeständig und eignen sich für verschiedene Verarbeitungsverfahren, insbesondere die Extrusion.

Stabilisierte matte Styrolcopolymere mit schlagzäh-modifizierendem Propfkautschuk ohne olefinische Doppelbindung sind bekannt und aufgrund der guten WitterungsBeständigkeit breit einsetzbar für diverse Außenanwendungen.

Beispielsweise werden in EP-A 1 044 241 stabilisierte Styrolcopolymere mit schlagzäh-modifizierendem Propfkautschuk offenbart, wobei die Mattierung durch kristalline Polyalkylenterephthalate, Polyalkylennaphthalate oder Polyamide erreicht wird. Nachteilig an dieser Ausführungsform ist jedoch die schlechte multi-axiale Zähigkeit.

In DE-A 195 36 892 werden Mattierungsmittel in Styrolcopolymeren auf Basis von Butadien, Polyalkyl-methacrylaten und Butylacrylaten genannt. Diese haben eine mittlere Teilchengröße von >700 nm, bevorzugt >3 µm, sehr bevorzugt > 4 µm. Diese Teilchen haben eine begrenzte Einfärbbarkeit und keine hohe multi-axiale Zähigkeit.

In DE-A 198 02 110 werden in Mikrosuspension hergestellte Alkylacrylat-Kautschuke beschrieben, die einen Partikel-Durchmesser von 0,08 bis 100 µm aufweisen. Die Mikrosuspension produziert zu große Kautschuke und kann in das Produkt verfärbende Schutzkolloide und Reste von öllöslichen Startern einbringen.

In US 5346954 werden Kern-Schale-Teilchen aus Alkylacrylaten beschrieben, die hinsichtlich des Brechungsindex 0,2 Einheiten von der Polymermatrix abweichen und einen durchschnittlichen Durchmesser von 2-15 µm aufweisen. Diese Teilchen haben eine schlechte Zähigkeit und schlechte Einfärbbarkeit aufgrund ihrer Partikelgröße.

In DE-A 42 42 485 werden Hydroxy(meth)acrylat-Kautschuke mit einer Größe von 30 bis 1000 nm beschrieben, die aufgrund der Hydroxygruppen eine gewisse Unverträglichkeit mit der Polymermatrix aufweisen können, was zu einem Abfall der Zähigkeit führen kann. In DE 28 26 925 werden thermoplastische Formmassen beschrieben, die kleinteilige Acrylatkautschuke enthalten und die gut einfärbbare Formteile ermöglichen.

Der vorliegenden Erfindung liegt als eine Aufgabe zugrunde, matte, witterungsbeständige Formmassen auf der Basis von Acrylnitril/Styrol/Acrylestern (ASA) bereit zu stellen, die eine gute Einfärbbarkeit und hohe Zähigkeit aufweisen.

Die Erfindung betrifft eine thermoplastische Zusammensetzung enthaltend folgende Komponenten (bzw. bestehend aus):
a) 30 bis 90 Gew.-% eines oder mehrerer Styrolcopolymere, bestehend aus Styrol und/oder α-Methylstyrol, sowie aus Acrylnitril und ggf. weiteren Monomeren, als Komponente A;
b) 10 bis 70 Gew.-% mehrerer schlagzäh-modifizierender Pfropfkautschuke ohne olefinische Doppelbindung in der Kautschukphase, als Komponente B, wobei diese Komponente B enthält:
   B1) 1 bis 50 Gew.-% Kautschuk-Partikel, die einen mittleren Teilchendurchmesservon 50 bis 150 nm aufweisen, als Komponente B1;
   B2) 50 bis 99 Gew.-% Kautschuk-Partikel, die einen mittleren Teilchendurchmesser von 800 bis 1200 nm aufweisen, als Komponente B2;
c) 0 bis 20 Gew.-% eines oder mehrerer Zusatzstoffe, die von den Komponenten A, B1 und B2 verschieden sind, als Komponente C;
mit der Maßgabe, dass die Gewichtsprozent-Angaben jeweils auf das Gesamtgewicht der Komponenten A bis C bezogen sind, und diese zusammen 100 Gew.-% ergeben.

Die Erfindung betrifft auch eine thermoplastische Zusammensetzung, für die man folgende Komponenten einsetzt:
a) 50 bis 80 Gew.-% eines oder mehrerer Styrolcopolymere, bestehend aus Styrol und/oder α-Methylstyrol, sowie aus Acrylnitril, als Komponente A;
b) 20 bis 50 Gew.-% mehrerer (häufig zwei oder drei) schlagzäh-modifizierender Pfropfkautschuke ohne olefinische Doppelbindung in der Kautschukphase, als Komponente B, wobei diese Komponente B enthält:
   B1) 10 bis 50 Gew.-% Kautschuk-Partikel, die einen mittleren Teilchendurchmesservon 50 bis 150 nm aufweisen, als Komponente B1;
   B2) 50 bis 90 Gew.-% Kautschuk-Partikel, die einen mittleren Teilchendurchmesser von 800 bis 1200 nm aufweisen, als Komponente B2;
c) 0 bis 20 Gew.-% eines oder mehrerer Zusatzstoffe, die von den Komponenten A, B1 und B2 verschieden sind, als Komponente C.

Die Erfindung betrifft auch eine thermoplastische Zusammensetzung, für die man folgende Komponenten einsetzt:
a) 50 bis 80 Gew.-% eines oder mehrerer Styrolcopolymere, bestehend aus Styrol und/oder α-Methylstyrol, sowie aus Acrylnitril, als Komponente A;
b) 20 bis 50 Gew.-% mehrerer schlagzäh-modifizierender Pfropfkautschuke ohne olefinische Doppelbindung in der Kautschukphase, als Komponente B, wobei diese Komponente B enthält:
   B1) 10 bis 50 Gew.-% Kautschuk-Partikel, die einen mittleren Teilchendurchmesser von 80 bis 120 nm aufweisen, als Komponente B1;
   B2) 50 bis 90 Gew.-% Kautschuk-Partikel, die einen mittleren Teilchendurchmesser von 900 bis 1200 nm aufweisen, als Komponente B2;
c) 0 bis 20 Gew.-% eines oder mehrerer Zusatzstoffe, die von den Komponenten A, B1 und B2 verschieden sind, als Komponente C.

Die Erfindung betrifft auch eine thermoplastische Zusammensetzung, wobei man als Komponente A ein Styrolcopolymer einsetzt, bestehend aus:
55 bis 90 Gew.-% Styrol und/oder α-Methylstyrol, insbesondere Styol,
10 bis 45 Gew.-% Acrylnitril,
0 bis 10 Gew.-% weiterer Monomere,
mit der Maßgabe, dass die Gewichtsprozent-Angaben jeweils auf das Gesamtgewicht der Komponente A bezogen sind. Oftmals wird eine SAN-Matrix als Komponente A eingesetzt, bestehend aus 65 Gew.-% Styrol und 35 Gew.-% Acrylnitril.

Die Erfindung betrifft auch eine thermoplastische Zusammensetzung, wobei man als Komponente A ein Copolymer bestehend aus Styrol und Acrylnitril einsetzt, sowie als Komponente B1 ein Acrylat-Styrol-Acrylnitril (ASA)-Pfropfcopolymer einsetzt, das als polymere Grundlage (Pfropfbasis) ein Acrylester-Polymer B11 aufweist, sowie eine polymere Auflage (Pfropfhülle) B12 aufweist, wobei die Auflage aus einem vinylaromatischen Monomeren (oftmals Styrol) und einem polaren, copolymerisierbaren, ethylenisch ungesättigten Monomeren (oftmals Acrylnitril) gebildet wird.

Die Erfindung betrifft auch eine thermoplastische Zusammensetzung, wobei man als Komponente B2 ein Acrylat-Styrol-Acrylnitril (ASA)-Pfropfcopolymer einsetzt, das als polymere Grundlage ein Acrylester-Polymer B21 aufweist sowie mindestens drei verschiedene polymere Auflagen B22, B23 und B24 aufweist, wobei die eine Auflage aus einem vinylaromatischen Monomeren (oftmals Styrol) und ggf. einem polaren, copolymerisierbaren, ethylenisch ungesättigten Monomeren (oftmals Acrylnitril) gebildet wird, und die andere Auflage aus mindestens einem Acrylat-Monomeren gebildet wird, und eine dritte Auflage aus einem vinylaromatischen Monomeren (oftmals Styrol) und mindestens einem polaren, copolymerisierbaren, ethylenisch ungesättigten Monomeren (oftmals Acrylnitril) gebildet wird.

Die Erfindung betrifft auch eine thermoplastische Zusammensetzung, wobei die Pfropfkautschuk-Komponente B1 durch Emulsionspolymerisation hergestellt wird.
Die Erfindung betrifft auch eine thermoplastische Zusammensetzung, wobei die Pfropfkautschuk-Komponente B2 durch Emulsionspolymerisation hergestellt wird.

Die Erfindung betrifft auch eine thermoplastische Zusammensetzung, wobei die Komponente B1 in einer Menge von 10 bis 20 Gew.-% (oftmals 14 bis 20 Gew.-%) und die Komponente B2 in einer Menge von 10 bis 40 Gew.-% (oftmals 15 bis 25 Gew.-%) vorhanden sind, jeweils auf das Gesamtgewicht der Komponenten A bis C bezogen.

Die Erfindung betrifft auch eine thermoplastische Zusammensetzung, wobei der mittlere Teilchendurchmesser der Pfropfkautschuk-Komponente B1 zwischen 90 bis 110 nm liegt.

Die Erfindung betrifft auch eine thermoplastische Zusammensetzung, wobei der mittlere Teilchendurchmesser der Pfropfkautschuk-Komponente B2 zwischen 950 bis 1100 nm liegt.

Die Erfindung betrifft auch eine thermoplastische Zusammensetzung, wobei für beide Pfropfkautschuk-Komponenten B1 und B2 als Grundlage ein Alkylacrylat mit C₁- bis C₈-Alkylresten, insbesondere Butylacrylat, und mindestens ein Monomer mit quervernetzenden Eigenschaften eingesetzt wird, ausgewählt aus der Gruppe:
Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallylisocyanurat, Diallylphthalat, Allylmethacrylat und Dihydrodicyclopentadienylacrylat. Häufig wird Allylmethacrylat (AMA) oder Dihydrodicyclopentadienylacrylat (DCPA) verwendet.

Die Erfindung betrifft auch eine thermoplastische Zusammensetzung, wobei man Styrol als vinylaromatische Komponente für die erste polymere Auflage B22 oder die zweite polymere Auflage B23 einsetzt, und wobei man ein Alkylacrylat mit C₁- bis C₈-Alkylresten, insbesondere Butylacrylat, sowie mindestens ein Monomer mit quervernetzenden Eigenschaften aus der Gruppe:
Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyl-isocyanurat, Diallylphthalat, Allylmethacrylat und Dihydrodicyclopentadienylacrylat,

für die erste polymere Auflage B22 einsetzt oder die zweite polymere Auflage B23, sowie ggf. die Monomere Styrol und Acrylnitril für eine dritte polymere Auflage B24 von B2 einsetzt.

Die Erfindung betrifft auch eine thermoplastische Zusammensetzung, wobei man als Pfropfkautschuk-Komponente B2 ein Acrylat-Styrol-Acrylnitril (ASA)-Pfropfpolymer einsetzt, das als polymere Grundlage ein Polymer B21 aus Butylacrylat und einem Monomer mit quervernetzenden Eigenschaften aus der Gruppe:
Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyl-isocyanurat, Diallylphthalat, Allylmethacrylat und Dihydrodicyclopentadienylacrylat,
sowie mindestens drei verschiedene polymere Auflagen B22, B23 und B24 aufweist, wobei die erste dieser Auflagen aus Styrol und einem Monomer mit quervernetzenden Eigenschaften aus der o. g. Gruppe (insbesondere AMA oder DCPA), die zweite dieser Auflagen aus Butylacrylat und einem Monomer mit quervernetzenden Eigenschaften aus der o.g. Gruppe (insbesondere AMA oder DCPA), und die dritte dieser Auflagen aus Styrol und Acrylnitril aufgebaut sind.

Die Erfindung betrifft auch eine thermoplastische Zusammensetzung, wobei man die Pfropfkautschuk-Komponenten B1 zu B2 im Gewichtsverhältnis von 2:1 bis 1:2 (häufig von 1,5 : 1 bis 1 : 1,5) einsetzt, und die Styrolcopolymer-Komponente A zur Pfropfkautschuk-Komponente B1 im Gewichtsverhältnis von 4:1 bis 4:3 einsetzt.

Gegenstand der Erfindung ist ferner ein Verfahren zur Herstellung einer thermoplastischen Zusammensetzung, wie zuvor beschrieben, dadurch gekennzeichnet, dass man die Styrol-Copolymer-Komponenten A durch Lösungspolymerisation oder "Bulkpolymerisation" herstellt, die Pfropfcopolymer-Komponenten B durch Emulsionspolymerisation herstellt, sowie die Komponenten A und B und gegebenenfalls C bei Temperaturen von 100 bis 300°C und einem Druck von 1 bis 50 bar in beliebiger Reihenfolge miteinander vermischt und anschließend extrudiert.

Gegenstand der Erfindung ist auch die Verwendung einer thermoplastischen Zusammensetzung, wie oben beschrieben zur Herstellung von Folien, Formkörpern oder Verbundteilen. Auch Gegenstand sind die Folien, Formkörper oder Verbundteile, enthaltend eine derartige thermoplastische Zusammensetzung.

Die Erfindung betrifft ferner ein Verfahren zur Herstellung von Verbundteilen aus mindestens einer Schicht, bestehend aus einer thermoplastischen Zusammensetzung wie oben beschrieben, und mindestens einer Schicht aus PVC oder ABS.

Die Erfindung betrifft auch ein Verbundteil bestehend aus mindestens einer Schicht aus einer thermoplastischen Zusammensetzung, wie oben beschrieben, und mindestens einer Schicht aus PVC oder ABS. Dabei können für die PVC- und ABS-Copolymer-Schichten die handelsüblichen Materialien eingesetzt werden. Gegenstand der Erfindung ist auch die Verwendung dieser Verbundteile für Gebäudeverkleidungen, insbesondere Außenverkleidungen.

Nachfolgend werden die Komponenten und deren Herstellung näher erläutert.

### Komponente A:

Als Komponente A enthalten die erfindungsgemäßen thermoplastischen Formmassen ein oder mehrere Styrolcopolymere. Dabei können in den Copolymeren neben Styrol beliebige geeignete Comonomere vorliegen. Bevorzugt handelt es sich um ein Styrol-Acrylnitril-Copolymer oder ein alpha-Methylstyrol-Acrylnitril-Copolymer. Besonders bevorzugt handelt es sich um ein Styrol-Acrylnitril-Copolymer (SAN).

Als Komponente A sind grundsätzlich alle dem Fachmann bekannten und in der Literatur beschriebenen Styrol-Acrylnitril-Copolymere, α-Methylstyrol-Acrylnitril-Copolymere oder deren Mischungen einsetzbar, sofern deren Mischungen eine Viskositätszahl VZ (gemessen nach DIN 53727 bei 25°C als 0,5 gew.-%ige Lösung in Dimethylformamid; diese Messmethode gilt auch für alle im folgenden genannten Viskositätszahlen VZ) gleich oder kleiner als 85 ml/g haben.

Bevorzugte Komponenten A sind aufgebaut aus 50 bis 90 Gew.-%, bevorzugt 60 bis 85 Gew.-%, insbesondere 65 bis 83 Gew.-%, Styrol und 10 bis 50 Gew.-%, bevorzugt 15 bis 40 Gew.-%, insbesondere 17 bis 35 Gew.-%, Acrylnitril, sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben. Oftmals handelt es sich um ein SAN-Copolymer ohne weitere Monomere.

Weiterhin bevorzugte Komponenten A sind aufgebaut aus 50 bis 90 Gew.-%, bevorzugt 60 bis 80 Gew.%, insbesondere 65 bis 78 Gew.-%, α-Methylstyrol und 10 bis 50 Gew.-%, bevorzugt 20 bis 40 Gew.-%, insbesondere 22 bis 35 Gew.-%, Acrylnitril sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente A und zusammen 100 Gew.-% ergeben.

Ebenfalls bevorzugte Komponenten A sind Mischungen dieser Styrol-Acrylnitril-Copolymere oder α-Methylstyrol-Acrylnitril-Copolymere.

Als oben genannte weitere Monomere sind alle copolymerisierbaren Monomere einsetzbar, wie beispielsweise p-Methylstyrol, t-Butylstyrol, Vinylnaphthalin, Alkylacrylate und/oder Alkylmethacrylate, beispielsweise solche mit C1- bis C8-Alkylresten, N-Phenylmaleinimid oder deren Mischungen.

Die Copolymere der Komponente A lassen sich nach bekannten Methoden herstellen. Sie lassen sich z. B. durch radikalische Polymerisation, insbesondere durch Emulsions-, Suspensions-, Lösungs- oder Massepolymerisation herstellen. Sie weisen Viskositätszahlen im Bereich von 40 bis 160 ml/g auf, dies entspricht mittleren Molekulargewichten Mw (Gewichtsmittelwert) von 40.000 bis 2.000.000 g/mol. Das M_{w} der SAN-Matrix liegt häufig im Bereich von 40.000 bis 300.000 g/mol.

### Komponente B:

Die Komponente B besteht aus mindestens zwei verschiedenen kautschukelastischen Pfropfcopolymeren von vinylaromatischen Verbindungen, insbesondere Styrol, und Vinylcyaniden, insbesondere Acrylnitril, auf Polyalkylacrylat-Kautschuken.

In einer bevorzugten Ausführungsform ist das kautschukelastische Pfropfcopolymer B aufgebaut aus zwei Komponenten B1 und B2.

Die Komponente B1 (kleine Partikelgröße) ist beispielsweise aufgebaut aus:
B-11 1 bis 99 Gew.-%, vorzugsweise 55 bis 80 Gew.-%, insbesondere 55 bis 65 Gew.-%, einer teilchenförmigen Pfropfgrundlage B11 mit einer Glasübergangstemperatur unterhalb von 0°C,
B-12 1 bis 99 Gew.-%, vorzugsweise 20 bis 45 Gew.-%, insbesondere 35 bis 45 Gew.-%, einer Pfropfauflage B12 aus den Monomeren, bezogen auf B.

Komponente B11 ist dabei aufgebaut aus:
B-111 60 bis 99,98 Gew.-%, vorzugsweise 80 bis 99,9 Gew.-%, mindestens eines C1-8-Alkylesters der Acrylsäure, vorzugsweise C4- bis C8-Alkylacrylaten, insbesondere n-Butylacrylat und/oder 2-Ethylhexylacrylat, als Komponente B-111,
B-112 0,01 bis 20 Gew.-%, vorzugsweise 0,1 bis 5 Gew.-%, mindestens eines polyfunktionellen vernetzenden Monomeren, vorzugsweise Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyliso-cyanurat, besonders bevorzugt Diallylphthalat, Allylmethacrylat ("AMA") und/oder Dihydrodicyclopentadienylacrylat ("DCPA") besteht als Komponente C-112, und
B-113 0 bis 39,99 Gew.-%, vorzugsweise 0 bis 19,9 Gew.-%, harte Polymere bilden-den Monomeren, wie Vinylacetat, (Meth)acrylnitril, Styrol, substituiertes Styrol, Methylmethacrylat oder Vinylether, als Komponente B-113.

Komponente B12 ist dabei aufgebaut aus:
B-121 40 bis 100 Gew.-%, vorzugsweise 65 bis 85 Gew.-% eines vinylaromatischen Monomeren, insbesondere des Styrols, α-Methylstyrols oder N-Phenylmaleinimids als Komponente B-121 und
B-122 0 bis 60 Gew.-%, vorzugsweise 15 bis 35 Gew.-% eines polaren, copolymerisierbaren, ethylenisch ungesättigten Monomeren, insbesondere Acrylnitril, (Meth)acrylsäureester oder Methacrylnitril als Komponente B-122.

Bei der Komponente B1 handelt es sich um ein Pfropfcopolymer, umfassend eine Pfropfgrundlage B11 und mindestens eine Pfropfauflage B12. Das Pfropfcopolymer B1 kann einen mehr oder weniger perfekt ausgeprägten Kern-Schale-Aufbau aufweisen (Pfropfgrundlage B11 stellt den Kern dar, die Pfropfauflage B12 die Schale), es ist aber auch möglich, dass die Pfropfauflage B12 die Pfropfgrundlage B11 nur unvollständig umschließt bzw. bedeckt oder aber auch die Pfropfauflage B12 die Pfropfgrundlage B11 ganz oder teilweise durchdringt.

Es ist auch möglich, zwei oder mehr Pfropfgrundlagen B11 einzusetzen, die sich beispielsweise in ihrer Zusammensetzung oder in der Teilchengröße voneinander unterscheiden. Solche Mischungen unterschiedlicher Pfropfgrundlagen können nach dem Fachmann an sich bekannten Methoden hergestellt werden, beispielsweise indem zwei oder mehr Kautschuk-Latexes separat hergestellt und die entsprechenden Dispersionen vermischt werden, aus den entsprechenden Dispersionen separat die Feucht-Kautschuke gefällt und beispielsweise in einem Extruder gemischt werden oder die entsprechenden Dispersionen separat vollständig aufgearbeitet und die erhaltenen Pfropfgrundlagen anschließend vermischt werden.

Das Pfropfcopolymer B1 kann zwischen der Pfropfgrundlage B11 und der Pfropfauflage B12 ein oder mehrere weitere Pfropfauflagen bzw. -hüllen oder -schalen aufweisen - beispielsweise mit anderen Monomerzusammensetzungen. Bevorzugt weist das Pfropfcopolymer B1 aber außer der Pfropfauflage B12 keine weiteren Pfropfauflagen bzw. -hüllen oder -schalen auf.

Das Polymer der Pfropfgrundlage B11 hat üblicherweise eine Glasübergangstemperatur unter 0°, vorzugsweise eine Glasübergangstemperatur unter (-20)°C, insbesondere unter (-30)°C. Ein Polymer aus den die Pfropfauflage B12 bildenden Monomeren besitzt üblicherweise eine Glasübergangstemperatur von mehr als 30°C, insbesondere mehr als 50°C (jeweils ermittelt nach DIN 53765).

Die Pfropfcopolymere B1 haben üblicherweise eine mittlere Teilchengröße d50 von 50 bis 150 nm, besonders bevorzugt 80 bis 120 nm. Diese Teilchengrößen können erzielt werden, wenn man als Pfropfgrundlage B1 mittlere Teilchengrößen d50 von 45 bis 190 nm, bevorzugt 50 bis 140 nm, besonders bevorzugt 75 bis 110 nm verwendet. Gemäß einer Ausführungsform der Erfindung ist die Teilchengrößenverteilung von B1 monomodal. Als mittlere Teilchengröße bzw. Teilchengrößen-Verteilung werden die aus der integralen Massenverteilung bestimmten Größen angegeben. Bei diesen und den weiteren im Rahmen der vorliegenden Erfindung genannten mittleren Teilchengrößen handelt es sich in allen Fällen um das Gewichtsmittel der Teilchengrößen, wie sie mittels HDC gemessen wurden (W. Wohlleben und H. Schuch in "Measurement of Particle Size Distribution of Polymer Latexes", 2010, Editors: Luis M. Gugliotta and Jorge R. Vega, p. 130 bis 153).

Bevorzugt werden die Pfropfcopolymere B1 durch radikalische Emulsionspolymerisation hergestellt in Gegenwart von Latices der Komponente B11 bei Temperaturen von 20 bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Polymerisationsverfahren sind beschrieben in WO-02/10222, DE-A-28 26 925, DE-A-31 49 358 und DE-C-12 60 135. Der Aufbau der Pfropfauflagen erfolgt vorzugsweise im Emulsionspolymerisationsverfahren, wie es beschrieben ist in DE-A-32 27 555, DE-A-31 49 357, DE-A-31 49 358, DE-A-34 14 118. Das definierte Einstellen der mittleren Teilchengrößen von 50 bis 200 nm, insbesondere 50 bis 150 nm, erfolgt bevorzugt nach den Verfahren, die beschrieben sind in der DE-C-12 60 135 und DE-A-28 26 925, bzw. Applied Polymer Science, Band 9 (1965), Seite 2929.

Das Verwenden von Polymeren mit unterschiedlichen Teilchengrößen ist beispielsweise bekannt aus DE-A-28 26 925 und US 5 196 480. Gemäß dem in der DE-B-12 60 135 beschriebenen Verfahren wird zunächst die Pfropfgrundlage B11 hergestellt, indem der oder die gemäß einer Ausführungsform der Erfindung verwendeten Acrylsäureester B-111 und die als Vernetzungs- und/oder Pfropf-Agenz wirkende Verbindung B-112, ggf. zusammen mit den weiteren monoethylenisch ungesättigten Monomeren B-113, in wäßriger Emulsion in an sich bekannter Weise bei Temperaturen zwischen 20 und 100°C, vorzugsweise zwischen 50 und 90°C, polymerisiert werden.

Es können die üblichen Emulgatoren, wie beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 0,7 bis 2 Gew.-%, bezogen auf die bei der Herstellung der Pfropfgrundlage B11 eingesetzten Monomeren, eingesetzt. Im allgemeinen wird bei einem Gewichtsverhältnis von Wasser zu Monomeren von 4:1 bis 0,6:1 gearbeitet. Als Polymerisationsinitiatoren dienen insbesondere die gebräuchlichen Persulfate, wie beispielsweise Kaliumpersulfat (UPs). Es können jedoch auch Redoxsysteme zum Einsatz gelangen.

Die Initiatoren werden im Allgemeinen in Mengen von 0,1 bis 1 Gew.-%, bezogen auf die bei der Herstellung der Pfropfgrundlage B11 eingesetzten Monomere, eingesetzt.

Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres α-Methylstyrol, bei der Polymerisation verwendet werden. Die genauen Polymerisationsbedingungen, insbesondere Art, Dosierung und Menge des Emulgators, werden innerhalb der oben angegebenen Bereiche im Einzelnen so bestimmt, dass der erhaltene Latex des vernetzten Acrylsäureesterpolymers B11 einen d50-Wert im Bereich von 50 bis 200 nm, vorzugsweise 50 bis 150 nm, besonders bevorzugt 80 bis 120 nm, besitzt. Die Teilchengrößenverteilung des Latex soll dabei vorzugsweise eng mit einem Polydispersitätsindex < 0.75 sein, entsprechend W. Mächtle and L. Börger, Analytical Ultracentrifugation of Polymers and Nanoparticles, (Springer, Berlin, 2006, ISBN 3-540-23432-2).

Zur Herstellung des Pfropfpolymers B1 kann in einem nächsten Schritt in Gegenwart des so erhaltenen Latex des vernetzten Acrylsäureester-Polymers B11 gemäß einer Ausführungsform der Erfindung ein Monomerengemisch aus Komponente B-121, bevorzugt Styrol, Komponente B-122, bevorzugt Acrylnitril und/oder eines (Meth)acrylsäureesters, und ggf. weiterer ungesättigter Monomere polymerisiert werden. Dabei können die Monomeren B-121, B-122 und ggf. weitere ungesättigte Monomere einzeln oder in Mischung miteinander zugefügt werden. Beispielsweise kann man zunächst Styrol alleine, und danach eine Mischung aus Styrol und Acrylnitril pfropfen. Es ist vorteilhaft, diese Pfropfcopolymerisation auf das als Pfropfgrundlage dienende vernetzte Acrylsäureesterpolymer wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage B11, wobei, falls notwendig, weiterer Emulgator und Initiator zugegeben werden kann. Das gemäß einer Ausführungsform der Erfindung aufzupfropfende Monomerengemisch kann dem Reaktionsgemisch auf einmal, absatzweise in mehreren Stufen (beispielsweise zum Aufbau mehrerer Pfropfauflagen) oder vorzugsweise kontinuierlich während der Polymerisation zugegeben werden.

Die Pfropfcopolymerisation des Gemisches der Komponenten B-121, B-122 und ggf. weiterer Monomerer in Gegenwart des vernetzten Acrylsäureesterpolymers B11 wird so geführt, dass ein Pfropfgrad von 10 bis 70 Gew.-%, vorzugsweise 20 bis 60 Gew.-%, insbesondere 30 bis 55 Gew.-%, bezogen auf das Gesamtgewicht der Komponente B1, im Pfropfcopolymer B1 resultiert. Da die Pfropfausbeute bei der Pfropfcopolymerisation oftmals nicht 100% beträgt, sollte vorteilhafter Weise eine etwas größere Menge des Monomerengemisches aus B-121, B-122 und ggf. weiterer Monomerer bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymers B1 ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 bis 333). Bei der Emulsions-Pfropfcopolymerisation entstehen im allgemeinen 5 bis 15 Gew.-%, bezogen auf das Pfropfcopolymer, an freiem, ungepfropftem Copolymer der Komponenten B-121, B-122 und ggf. der weiteren Monomere. Der Anteil des Pfropfcopolymers B1 in dem bei der Pfropfcopolymerisation erhaltenen Polymerisa-tionsprodukt kann beispielsweise nach der in US 2004/0006178 beschriebenen Methode ermittelt werden.

Die Komponente B2 (große Partikelgröße) ist beispielsweise aufgebaut aus:
B-21 0,05 bis 0,9 Gew.-%, vorzugsweise 0,05 bis 0,5 Gew.-%, insbesondere 0,1 bis 0,3 Gew.-%, einer teilchenförmigen Grundlage B21 mit einer Glasübergangstemperatur unterhalb von 0°C,
B-22 1 bis 9 Gew.-%, vorzugsweise 1 bis 7 Gew.-%, insbesondere 3 bis 5 Gew.-%, einer teilchenförmigen auf B21 aufgesetzten Schale B22,
B-23 80 bis 45 Gew.-%, vorzugsweise 75 bis 50 Gew.-%, insbesondere 70 bis 55 Gew.-%, einer teilchenförmigen auf B22 aufgesetzten Schale B23,
B-24 1 bis 99 Gew.-%, vorzugsweise 20 bis 45 Gew.-%, insbesondere 35 bis 45 Gew. %, einer Pfropfauflage B24 mit einer Glasübergangstemperatur unterhalb von 0°C aus den Monomeren, bezogen auf B.

Die Komponenten B-21 ist dabei aufgebaut aus:
B-211 60 bis 99,98 Gew.-%, vorzugsweise 80 bis 99,9 Gew.-%, mindestens eines C1-8-Alkylesters der Acrylsäure, vorzugsweise C4- bis C8-Alkylacrylaten, insbesondere n-Butylacrylat und/oder 2-Ethylhexylacrylat, als Komponente B-211,
B-212 0,01 bis 20 Gew.-%, vorzugsweise 0,1 bis 5 Gew.-%, mindestens eines polyfunktionellen vernetzenden Monomeren, vorzugsweise Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyliso-cyanurat, besonders bevorzugt Diallylphthalat, Allylmethacrylat ("AMA") und/oder Dihydrodicyclopentadienylacrylat ("DCPA") besteht als Komponente B-212,
B-213 0 bis 39,99 Gew.-%, vorzugsweise 0 bis 19,9 Gew.-%, harte Polymere bilden-den Monomeren, wie Vinylacetat, (Meth)acrylnitril, Styrol, substituiertes Styrol, Methylmethacrylat oder Vinylether, als Komponente B-213.

Die Komponente B-22 ist dabei aufgebaut entweder aus
B-221 60 bis 99,98 Gew.-%, vorzugsweise 80 bis 99,9 Gew.-%, "harte Polymere" bildenden Monomere, wie Vinylacetat, (Meth)acrylnitril, Styrol, substituiertes Styrol, Methylmethacrylat oder Vinylether, als Komponente B-221.
B-222 0,01 bis 20 Gew.-%, vorzugsweise 0,1 bis 5 Gew.-%, mindestens eines polyfunktionellen, vernetzenden Monomeren, vorzugsweise Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyliso-cyanurat, besonders bevorzugt Diallylphthalat, Allylmethacrylat ("AMA") und/oder Dihydrodicyclopentadienylacrylat ("DCPA") als Komponente B-222,
B-223 0 bis 39,99 Gew.-%, vorzugsweise 0 bis 19,9 Gew.-%, mindestens eines C1-8-Alkylesters der Acrylsäure, vorzugsweise C4- bis C8-Alkylacrylaten, insbesondere n-Butylacrylat und/oder 2-Ethylhexylacrylat, als Komponente B-211.
oder aufgebaut aus
B-224 60 bis 99,98 Gew.-%, vorzugsweise 80 bis 99,9 Gew.-%, mindestens eines C1-8-Alkylesters der Acrylsäure, vorzugsweise C4- bis C8-Alkylacrylaten, insbesondere n-Butylacrylat und/oder 2-Ethylhexylacrylat, als Komponente B-224,
B-225 0,01 bis 20 Gew.-%, vorzugsweise 0,1 bis 5 Gew.-%, mindestens eines polyfunktionellen vernetzenden Monomeren, vorzugsweise Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyliso-cyanurat, besonders bevorzugt Diallylphthalat, Allylmethacrylat ("AMA") und/oder Dihydrodicyclopentadienylacrylat ("DCPA") als Komponente B-225,
B-226 0 bis 39,99 Gew.-%, vorzugsweise 0 bis 19,9 Gew.-%, harte Polymere bilden-den Monomeren, wie Vinylacetat, (Meth)acrylnitril, Styrol, substituiertes Styrol, Methylmethacrylat oder Vinylether, als Komponente B-226.

Die Komponente B-23 ist dabei aufgebaut aus
B-234 60 bis 99,98 Gew.-%, vorzugsweise 80 bis 99,9 Gew.-%, mindestens eines C1-8-Alkylesters der Acrylsäure, vorzugsweise C4- bis C8-Alkylacrylaten, insbesondere n-Butylacrylat und/oder 2-Ethylhexylacrylat, als Komponente B-224,
B-235 0,01 bis 20 Gew.-%, vorzugsweise 0,1 bis 5 Gew.-%, mindestens eines polyfunktionellen vernetzenden Monomeren, vorzugsweise Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyliso-cyanurat, besonders bevorzugt Diallylphthalat, Allylmethacrylat ("AMA") und/oder Dihydrodicyclopentadienylacrylat ("DCPA") als Komponente B-225,
B-236 0,01 bis 39,99 Gew.-%, vorzugsweise 0 bis 19,9 Gew.-%, "harte Polymere" bildenden Monomeren, wie Vinylacetat, (Meth)acrylnitril, Styrol, substituiertes Styrol, Methylmethacrylat oder Vinylether, als Komponente B-226.

Die Komponente B-24 ist dabei aufgebaut aus:
B-241 40 bis 100 Gew.-%, vorzugsweise 65 bis 85 Gew.-% eines vinylaromatischen Monomeren, insbesondere des Styrols, α-Methylstyrols oder N-Phenylmaleinimids als Komponente B-241 und
B-242 0 bis 60 Gew.-%, vorzugsweise 15 bis 35 Gew.-% eines polaren, copolymerisierbaren, ethylenisch ungesättigten Monomeren, insbesonders Acrylnitril, (Meth)acrylsäureester oder Methacrylnitril als Komponente B-242.

Bei der Komponente B2 handelt es sich um ein Pfropfcopolymer umfassend eine Saat (Grundlage) B21, eine Schale (Auflage) B22, eine weitere Schale B23 und eine Pfropfauflage B24. Das Pfropfcopolymer B2 kann einen mehr oder weniger perfekt ausgeprägten Kern-Schale-Aufbau aufweisen (Saat B21 stellt den Kern dar und B22, B23, sowie B24 die Schalen), es ist aber auch möglich, dass eine der Schalen B22, B23 und B24 die Saat B21 oder eine der vorhergehenden Schalen nur unvollständig umschließt bzw. bedeckt oder aber auch die Pfropfauflage B24 die Pfropfgrundlagen B21, B22 und B23 ganz oder teilweise durchdringt.

Es ist auch möglich, zwei oder mehr Saatlatices B21 einzusetzen, die sich beispielsweise in ihrer Zusammensetzung oder in der Teilchengröße voneinander unterscheiden. Solche Mischungen unterschiedlicher Saatlatices können nach dem Fachmann an sich bekannten Methoden hergestellt werden, beispielsweise indem zwei oder mehr Kautschuklatices separat hergestellt und die entsprechenden Dispersionen vermischt werden.

Dasselbe gilt für die Schalen B22 und B23, die sich beispielsweise in ihrer Zusammensetzung oder in der Teilchengröße voneinander unterscheiden können. Solche Mischungen unterschiedlicher Saatlatices können nach dem Fachmann an sich bekannten Methoden hergestellt werden, beispielsweise indem zwei oder mehr Kautschuklatices separat hergestellt und die entsprechenden Dispersionen vermischt werden, aus den entsprechenden Dispersionen separat die Feucht-Kautschuke B2 gefällt und beispielsweise in einem Extruder gemischt werden oder die entsprechenden Dispersionen separat vollständig aufgearbeitet und die erhaltenen Saatlatex anschließend vermischt werden.

Das Polymer der Saat B21 hat üblicherweise eine Glasübergangstemperatur unter 0°, vorzugsweise eine Glasübergangstemperatur unter (-20)°C, insbesondere unter (-30)°C. Ein Polymer aus den die Pfropfauflage B24 bildenden Monomeren besitzt üblicherweise eine Glasübergangstemperatur von mehr als 30°C, insbesondere mehr als 50°C (jeweils ermittelt nach DIN 53765).

Bevorzugt werden die Pfropfcopolymere B2 durch radikalische Emulsionspolymerisation hergestellt in Gegenwart von Latices der Komponente B21 bei Temperaturen von 20 bis 120°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C. Geeignete Polymerisationsverfahren sind beschrieben in WO 02/10222, DE-A-28 26 925, DE-A-31 49 358 und DE-C-12 60 135. Der Aufbau der Pfropfauflagen erfolgt vorzugsweise im Emulsionspolymerisationsverfahren, wie es beschrieben ist in DE-A-32 27 555, DE-A-31 49 357, DE-A-31 49 358, DE-A-34 14 118.

Das Verwenden von Polymeren mit unterschiedlichen Teilchengrößen ist beispielsweise bekannt aus DE-A-28 26 925 und US 5 196 480. Gemäß des in DE-B-12 60 135 beschriebenen Verfahrens wird zunächst die Pfropfgrundlage B21 hergestellt, indem der oder die gemäß einer Ausführungsform der Erfindung verwendeten Acrylsäureester B-211 und die als Vernetzungs- und/oder Pfropf-Agenz wirkende Verbindung B-212, ggf. zusammen mit den weiteren monoethylenisch ungesättigten Monomeren B-213, in wäßriger Emulsion in an sich bekannter Weise bei Temperaturen zwischen 20 und 100°C, vorzugsweise zwischen 50 und 90°C, polymerisiert werden.

Es können die o.g. üblichen Emulgatoren, wie beispielsweise Alkalisalze von Alkyl- oder Alkylarylsulfonsäuren, verwendet werden. Vorzugsweise verwendet man die Natriumsalze von Alkylsulfonaten oder Fettsäuren mit 10 bis 18 Koh-lenstoffatomen. Gemäß einer Ausführungsform werden die Emulgatoren in Mengen von 0,5 bis 5 Gew.-%, insbesondere von 0,7 bis 2 Gew.-%, bezogen auf die bei der Herstellung der Pfropfgrundlage B21 eingesetzten Monomeren, eingesetzt. Im allge-meinen wird bei einem Gewichtsverhältnis von Wasser zu Monomeren von 4:1 bis 0,6:1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen.

Die Initiatoren werden im Allgemeinen in Mengen von 0,1 bis 1 Gew.-%, bezogen auf die bei der Herstellung der Pfropfgrundlage B21 eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres α-Methylstyrol, bei der Polymerisation verwendet werden. Die genauen Polymerisationsbedingungen, insbesondere Art, Dosierung und Menge des Emulgators, werden innerhalb der oben angegebenen Bereiche im Einzelnen so bestimmt, dass der erhaltene Latex des vernetzten Acrylsäureesterpolymers B21 den gewünschten d50-Wert besitzt. Die Teilchengrößenverteilung des Latex soll dabei vorzugsweise eng mit einem Polydispersitätsindex < 0.75 sein.

Anschließend wird gemäß dem in der DE-B-12 60 135 beschriebenen Verfahren eine polymere Auflage B22 hergestellt, indem der oder die gemäß einer Ausführungsform der Erfindung verwendeten Acrylsäureester B-224 oder harte Polymere bildende Monomere B-221 und die als Vernetzungs- und/oder Pfropfagenz wirkende Verbindung B 222 bzw. B-225, ggf. zusammen mit den weiteren monoethylenisch ungesättigten Monomeren B-223 oder B-226, in wäßriger Emulsion in an sich bekannter Weise bei Temperaturen zwischen 20 und 120°C, vorzugsweise zwischen 50 und 110°C, polymerisiert werden. Es können die üblichen Emulgatoren, wie beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 0,7 bis 2 Gew.-%, bezogen auf die bei der Herstellung der Grundlage B21 eingesetzten Monomeren, eingesetzt. Im Allgemeinen wird bei einem Gewichtsverhältnis von Wasser zu Monomeren von 4:1 bis 0,6:1 gearbeitet. Als Polymerisationsinitiatoren dienen insbesondere die gebräuchlichen Persulfate, wie beispielsweise Kaliumpersulfat.

Es können jedoch auch Redoxsysteme zum Einsatz gelangen. Die Initiatoren werden im allgemeinen in Mengen von 0,1 bis 1 Gew.-%, bezogen auf die bei der Herstellung der Grundlage B21 eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres α-Methylstyrol, bei der Polymerisation verwendet werden. Die genauen Polymerisationsbedingungen, insbesondere Art, Dosierung und Menge des Emulgators, werden innerhalb der oben angegebenen Bereiche im Einzelnen so bestimmt, dass der erhaltene Latex des vernetzten Acrylsäureesterpolymers B22 einen d50-Wert im Bereich von 250 bis 500 nm, vorzugsweise 300 bis 400 nm, besonders bevorzugt 325 bis 375 nm, besitzt. Die Teilchengrößenverteilung des Latex soll dabei vorzugsweise eng mit einem Polydispersitätsindex < 0.75 sein, entsprechend W. Mächtle and L. Börger, Analytical Ultracentrifu-gation of Polymers and Nanoparticles, (Springer, Berlin, 2006, ISBN 3-540-23432-2).

Anschließend wird gemäß dem in der DE-B-12 60 135 beschriebenen Verfahren eine polymere Auflage B23 hergestellt, indem der oder die gemäß einer Ausführungsform der Erfindung verwendeten Acrylsäureester B-235 und die als Vernetzungs- und/oder Pfropfagenz wirkende Verbindung B-235, ggf. zusammen mit den weiteren monoethylenisch ungesättigten Monomeren B-236, in wäßriger Emulsion in an sich bekannter Weise bei Temperaturen zwischen 20 und 120°C, vorzugsweise zwischen 50 und 110°C, polymerisiert werden. Es können die üblichen Emulgatoren verwendet werden. Gemäß einer Ausführungsform werden die Emulgatoren in Mengen von 0,5 bis 5 Gew.-%, insbesondere von 0,7 bis 2 Gew.-%, bezogen auf die bei der Herstellung der Grundlage B22 eingesetzten Monomeren, ein-gesetzt. Im Allgemeinen wird bei einem Gewichtsverhältnis von Wasser zu Monomeren von 4:1 bis 0,6:1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im Allgemeinen in Mengen von 0,1 bis 1 Gew.-%, bezogen auf die bei der Herstellung der Grundlage B22 eingesetzten Monomeren, eingesetzt. Als weitere Polymerisationshilfsstoffe können die üblichen Puffersubstanzen, durch welche pH-Werte von vorzugsweise 6 bis 9 einge-stellt werden, wie Natriumbicarbonat und Natriumpyrophosphat, sowie 0 bis 3 Gew.-% eines Molekulargewichtsreglers, wie Mercaptane, Terpinole oder dimeres α-Methylstyrol, bei der Polymerisation verwendet werden.

Die genauen Polymerisations-bedingungen, insbesondere Art, Dosierung und Menge des Emulgators, werden inner-halb der oben angegebenen Bereiche im Einzelnen so bestimmt, dass der erhaltene Latex des vernetzten Acrylsäureesterpolymers B23 einen d50-Wert im Bereich von 800 bis 950 nm, vorzugsweise 825 bis 925 nm, oftmals 850 bis 900 nm, besitzt. Die Teilchengrößenverteilung des Latex soll dabei vorzugsweise eng mit einem Polydispersitätsindex < 0.75 sein.

Zur Herstellung des Pfropfpolymers B2 kann in einem nächsten Schritt in Gegen-wart des so erhaltenen Latex des vernetzten Acrylsäureester-Polymers B23 gemäß einer Ausführungsform der Erfindung ein Monomerengemisch aus Komponente B-241, bevorzugt Styrol, Komponente B-242, bevorzugt Acrylnitril und/oder eines (Meth)acrylsäureesters, und ggf. weiterer ungesättigter Monomere polymerisiert werden. Dabei können die Monomeren B-241, B-242 (und ggf. weitere ungesättigte Monomere) einzeln oder in Mischung miteinander zugefügt werden. Beispielsweise kann man zunächst Styrol alleine, und danach eine Mischung aus Styrol und Acrylnitril pfropfen. Es ist vorteilhaft, diese Pfropfcopolymerisation auf das als Pfropfgrundlage dienende vernetzte Acrylsäureesterpolymer wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage B23, wobei, falls notwendig, weiterer Emulgator und Initiator zugegeben werden kann.

Das gemäß einer Ausführungsform der Erfindung aufzupfropfende Monomerengemisch kann dem Reaktionsgemisch auf einmal, absatzweise in mehreren Stufen - beispielsweise zum Aufbau mehrerer Pfropfauflagen - oder vorzugsweise kontinuierlich während der Polymerisation zugegeben werden. Die Pfropfcopolymerisation des Gemisches der Komponenten B-241, B-242 (und ggf. weiterer Monomerer) in Gegenwart des vernetzenden Acrylsäureesterpolymers B23 wird so geführt, dass ein Pfropfgrad von 10 bis 70 Gew.-%, vorzugsweise 20 bis 60 Gew.-%, insbesondere 30 bis 55 Gew.-%, bezogen auf das Gesamtgewicht der Komponente B2, im Pfropfcopolymer B2 resultiert. Da die Pfropfausbeute bei der Pfropfcopolymerisation nicht 100% beträgt, sollte vorteilhafter Weise eine etwas größere Menge des Monomerengemisches aus B-241, B-242 und ggf. weiterer Monomerer bei der Pfropfcopolymerisation eingesetzt werden, als es dem gewünschten Pfropfgrad entspricht.

Die Steuerung der Pfropfausbeute bei der Pfropfcopolymerisation und somit des Pfropfgrades des fertigen Pfropfcopolymers B2 ist dem Fachmann geläufig und kann beispielsweise u.a. durch die Dosiergeschwindigkeit der Monomeren oder durch die Regler-Zugabe erfolgen (Chauvel, Daniel, ACS Polymer Preprints 15 (1974), Seite 329 bis 333). Bei der Emulsions-Pfropfcopolymerisation entstehen im allgemeinen 5 bis 15 Gew.-%, bezogen auf das Pfropfcopolymer, an freiem, ungepfropftem Copolymer der Komponenten B-241, B-242 und ggf. der weiteren Monomere.
Der Anteil des Pfropfcopolymers B2 in dem bei der Pfropfcopolymerisation erhaltenen Polymerisationsprodukt kann beispielsweise nach der in US 2004/0006178 beschriebenen Methode ermittelt werden.

Die erfindungsgemäßen Pfropfcopolymere B können so weiterverwendet werden, wie sie in der Reaktionsmischung anfallen, beispielsweise als Latexemulsion oder - dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt. Dazu zählt z.B., dass die Pfropfcopolymere B aus der Reaktionsmischung isoliert werden, z.B. durch Sprühtrocknung, Scherung oder durch Fällen mit starken Säuren oder mittels Nukleierungsmittel, wie anorganischen Verbindungen, z.B. Magnesiumsulfat. Die in der Reaktionsmischung vorliegenden Pfropfcopolymere B können aber auch dadurch aufgearbeitet werden, dass sie ganz oder teilweise entwässert werden. Ebenso ist es möglich, die Aufarbeitung mittels einer Kombination der genannten Maßnahmen vorzunehmen.

Das Mischen der Komponenten A und B zur Herstellung der Formmasse kann nach jeder beliebigen Weise nach allen bekannten Methoden erfolgen. Wenn diese Komponenten beispielsweise durch Emulsionspolymerisation hergestellt worden sind, ist es möglich, die erhaltenen Polymerdispersionen miteinander zu vermischen, darauf die Polymere gemeinsam auszufällen und das Polymergemisch aufzuarbeiten. Vorzugsweise erfolgt jedoch das Abmischen dieser Komponenten durch gemeinsames Extrudieren, Kneten oder Verwalzen der Komponenten, wobei die Komponenten, sofern erforderlich, zuvor aus der bei der Polymerisation erhaltenen Lösung oder wässrigen Dispersion isoliert worden sind. Die in wässriger Dispersion erhaltenen Produkte B der Pfropfcopolymerisation können auch nur teilweise entwässert werden und als feuchte Krümel mit der Hartmatrix A vermischt werden, wobei dann während des Vermischens die vollständige Trocknung der Pfropfcopolymere B erfolgt.

In weiteren Ausführungsformen der erfindungsgemäßen Verfahren kann die Herstellung der Pfropfgrundlagen B11 und B 21 in Gegenwart von Saatpartikeln erfolgen.

Saatpartikel haben in der Regel eine Teilchengröße d50 von 10 bis 200 nm, bevorzugt 10 bis 180 nm, besonders bevorzugt 10 bis 160 nm. Es wird bevorzugt, Saatpartikel einzusetzen, die eine geringe Breite der Teilchengrößenverteilung haben. Darunter sind Saatpartikel besonders bevorzugt, die eine monomodale Teilchengrößenverteilung haben. Die Saatpartikel können grundsätzlich aus kautschukelastische Polymere bildenden Monomeren, beispielsweise Acrylaten, oder aus einem Polymeren, dessen Glasübergangstemperatur mehr als 0°C, bevorzugt mehr als 25°C beträgt, aufgebaut sein.
Zu den bevorzugten Monomeren, auf denen diese Saatpartikel basieren, zählen vinylaromatische Monomere wie Styrol, ringsubstiuierte Styrole oder alpha-Methylstyrol, darunter bevorzugt Styrol, Acrylnitril, Alkylacrylsäure, Alkylacrylate, darunter bevorzugt n-Butylacrylat. Es kommen auch Mischungen aus zwei oder mehr, bevorzugt zwei der genanten Monomeren in Betracht. Ganz besonders bevorzugt sind Saatpartikel aus Polystyrol oder n-Butylacrylat. Die Herstellung derartiger Saatpartikel ist dem Fachmann bekannt oder kann nach an sich bekannten Methoden erfolgen. Bevorzugt werden die Saatpartikel durch partikelbildende heterogene Polymerisationsverfahren, bevorzugt durch Emulsionspolymerisation, erhalten. Die Saatpartikel werden erfindungsgemäß vorgelegt, wobei es möglich ist, die Saatpartikel zunächst separat herzustellen, aufzuarbeiten und dann einzusetzen. Es ist aber auch möglich, die Saatpartikel herzustellen und ihnen danach ohne vorherige Aufarbeitung die Monomermischung aus B-111, B-112 und ggf. B-113 oder B-211, B-212 oder B-213 zuzufügen.

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methylethylketon oder Toluol. Üblicherweise liegt der QI der Pfropfcopolymere B der erfindungsgemäßen Formmassen im Bereich QI = 10 bis 60. Bevorzugt wird ein QI von 6 bis 18 besonders bevorzugt von 7 bis 15 in Toluol.

Zur Bestimmung des Quellungsindex wird eine wässrige Dispersion eines Propfcopolymeris B1 oder B2 auf einen Blech bei 80°C unter leichtem Vakuum (600 bis 800 mbar) und Stickstoffatmosphäre über Nacht getrocknet. Von dem ca. 2mm dicken übrig-bleibenden Film wird anschließend eine 1cm2 große Scheibe abgeschnitten und in 50ml Toluol (oder Methylethylketon) in einem Penicillinglas über Nacht gequollen. Das überstehende Toluol wird abgesaugt, der gequollene Film gewogen und über Nacht bei 80°C getrocknet. Das Gewicht des getrockneten Films wird bestimmt. Der Quellungsindex ergibt sich aus dem Quotienten der Gewichte des gequollenen Gels und dem getrockneten Gel.

### Komponente C

Neben den copolymeren Komponenten A und B beinhalten die erfindungsgemäßen Formmassen häufig einen oder mehrere, von den Komponenten A und B verschiedene Zusatzstoffe bzw. Additive, die für Kunststoffmischungen typisch und gebräuchlich sind.

Als solche Zusatzstoffe bzw. Additive seien beispielsweise genannt: Farbstoffe, Pigmente, Färbemittel, Antistatika, Antioxidantien, Stabilisatoren zur Verbesserung der Thermostabilität, zur Verbesserung der UV-Beständigkeit, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, lodide), die sich von Metallen der Gruppe I des Periodensystems der Elemente ableiten (wie Li, Na, K, Cu).

Als Komponente C geeignete Stabilisatoren sind die üblichen gehinderten Phenole, aber auch "Vitamin E" bzw. analog aufgebaute Verbindungen. Auch Benzophenone, Resorcine, Salicylate, Benzotriazole und andere Verbindungen sind geeignet. Diese werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen - sofern vorhanden - im Bereich von 0,05 bis 1 Gew.-% (bezogen auf das Gesamtgewicht der erfindungsgemäßen Formmassen).

Auch Siliconöle, oligomeres Isobutylen oder ähnliche Stoffe kommen als Zusatzstoffe in Frage, die üblichen Mengen betragen - sofern vorhanden - 0,05 bis 5 Gew.-% (bezogen auf das Gesamtgewicht der erfindungsgemäßen Formmassen). Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel und Stabilisatoren, Schmiermittel und Antistatika werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Die erfindungsgemäßen Formmassen können in einer Reihe von matten Extrusionsanwendungen zum Einsatz kommen, aber insbesondere in co-extrudierten Hausverkleidungen und Fensterprofilen auf Polyvinylchlorid (PVC) oder Acrylnitril-Butadien-Styrol (ABS). Die erfindungsgemäße Formmasse hat dabei eine Schichtdicke zwischen 50-200µm in der Co-Extrusion.

Das in diesen co-extrudierten Anwendungen benutze PVC kann mit Kautschuken, Füllstoffen, wie Calcium Carbonate, Verarbeitsungshilfsmitteln, Farbstoffen, wie Titandioxid, UV-Additiven und Recyclat versetzt sein.

Die Co-Extrusion findet bevorzugt bei Temperaturen unterhalb von 250°C statt, sehr bevorzugt bei Temperaturen zwischen 200-230°C der erfindungsgemäßen Formmassen.

Die Erfindung wird anhand der nachfolgenden Beispiele und Patentansprüche näher erläutert.

### Beispiele

Zu den Meßmethoden:
Die Duchstoßarbeit wurde an 100µm dicken Folien nach der ISO 6603 an 80mm dicken Rundscheiben bei 23°C und 50% relative Luftfeuchte bestimmt. Die Prüfgeschwindigkeit war 4 m/s und die Duchstoßenergie betrug 153,7J.

Die Messung des Oberflächenglanzes aller Proben erfolgte nach DIN 67530 bei 60° Betrachtungswinkel.

Die Transmission wurde an einem PerkinElmer UV/VIS/NIR-Spektralphotometer Lambda 900 mit einer 150 mm Ulbricht-Kugel bestimmt.

Zu den Einsatzstoffen:
Die Komponenten oder Produkte mit vorangestelltem "V-" sind nicht erfindungsgemäß und dienen zum Vergleich.

Als Komponenten A (bzw. V-A zum Vergleich) wurden eingesetzt:
A-i: ein Styrol-Acrylnitril-Copolymer mit 65 Gew.-% Styrol und 35 Gew.-% Acrylnitril und einer Viskositätszahl von 80 ml/g (bestimmt in 0,5 Gew.-%iger DMF-Lösung bei 25 °C) und einem Mw von 104.000 (bestimmt mit SEC-MALLS).
A-ii: ein Styrol-Acrylnitril-Copolymer mit 65 Gew.-% Styrol und 35 Gew.-% Acrylnitril und einer Viskositätszahl von 60 ml/g (bestimmt in 0,5 gew.-%iger DMF-Lösung bei 25 °C) und einem Mw von 82.000 (bestimmt mit SEC-MALLS).
V-A-iii: Luran S 797 SE UV ASA (ein UV-stabilisierter ASA Thermoplast mit einem E-Modul von ca. 2000 MPa nach ISO 527) analog EP-A 1 044 241.

Als Komponenten B (bzw. V-B zum Vergleich) wurden eingesetzt:
B-i: Ein kleinteiliger Kautschuk,
   hergestellt in Anlehnung an EP-A-450 485, wo dieser Kautschuk als erfindungsgemäßes Beispiel des feinteiligen Propfmischpolymers A beschrieben ist. Bei Komponente B-i wurde anstelle von 2 Teilen Tricyclodecenylacrylat mit 2 Teilen Dihydrodicyclopentadienylacrylat (DCPA) synthetisiert:
B-i1 2508g Wasser wurden unter Zusatz von 42,5g Kaliumsalz einer C12- bis C18-Paraffinsulfonsäure und 7g Natriumhydrogencarbonat unter Rühren auf 65°C erwärmt. Anschließend wurden 5g Kaliumpersulfat zugegeben. Innerhalb von 3,5 Stunden wurden 1670g Butylacrylat mit 34g Dihydrodicyclopentadienylacrylat (CAS Nummer 12542-30-2) zugegeben. Danach wurde noch zwei Stunden sich selbst überlassen und auf RT abgekühlt. Der erhaltene Latex hatte einen Feststoffgehalt von 39.8 Gew.-%. Die mittlere Teilchengröße wurde zu 80,1 nm bestimmt. Die Teilchengrößenverteilung war eng (Quotient Q=0,32).
B-i2 2110g Teile des nach B-i1 erhaltenen Latex wurden mit 1330g Wasser auf 65°C erhitzt. Es wurden 2,5g Kaliumpersulfat zugegeben und 560g Styrol und Acrylnitril (Gewichtsverhältnis 75:25) unter Rühren innerhalb 3 Stunden zudosiert und die Dispersion sich anschließend für 2 Stunden selbst überlassen. Sodann wurde mittels Calciumchloridlösung bei 95°C gefällt, abgetrennt, mit Wasser gewaschen und im warmen Luftstrom getrocknet. Die mittlere Teilchengröße von B-i2 wurde zu 94 nm bestimmt.
B-ii: Ein großteiliger Kautschuk:
   B-ii1 2856g Wasser wurden mit 41g des nach B-i1 erhaltenen Latex und 5g Natriumhydrogencarbonat unter Rühren auf 85°C erwärmt. Anschließend wurden 0,2g Kaliumpersulfat zugegeben. Anschließend wurde innerhalb von 10 min 66,5g Styrol mit 0.2g Allylmethylacrylat (CAS Nummer 96-05-9), 45 min abgewartet und anschließend 1,3g Kaliumpersulfat zugegeben. Über 2 Stunden wurden anschließend 1263.5g Styrol mit 3,8g Allylmethylacrylat zudosiert, sowie über 3 Stunden 20g eines Kaliumsalzes einer C12- bis C18-Paraffinsulfonsäure in 250g Wasser. Während dieser Zudosierungen wurde zusätzlich nach 2 und 3 Stunden jeweils 1.3g Kaliumpersulfat zugegeben. Nach dem Ende der Zudosierung des Kaliumsalzes einer C12- bis C18-Paraffinsulfonsäure wurde die Reaktion für 2h sich selbst überlassen und auf RT abgekühlt. Der erhaltene Latex hatte einen Feststoffgehalt von 30.1 Gew.-%. Die mittlere Teilchengröße wurde zu 345 nm bestimmt. Die Teilchengrößenverteilung war eng (Quotient Q=0,18).
   B-ii2 2011 g Wasser wurden mit 481g des nach B-ii1 erhaltenen Latex mit 6,7g Natriumhydrogencarbonat unter Rühren auf 65°C erwärmt. An-schließend wurde 5,3g Kaliumpersulfat sofort zugegeben, sowie 1777g Butylacrylat mit 2,7g Allylmethylacrylat über 3,5 Stunden und 30g des Kaliumsalzes einer C12- bis C18-Paraffinsulfonsäure in 500g Wasser über 3,25 Stunden. Nach der Zugabe vom Butylacrylat und Allylmethylacrylat wurde die Reaktion anschließend für 2 Stunden sich selbst überlassen und auf RT abgekühlt. Der erhaltene Latex hatte einen Feststoffgehalt von 39.6 Gew.-%. Die mittlere Teilchengröße wurde zu 870 nm bestimmt. Die Teilchengrößenverteilung war eng (Quotient Q=0,12).
   B-ii3 4685g Teile des nach B-ii2 erhaltenen Latex wurden mit 2905g Wasser und 8.4g des Kaliumsalzes einer C12- bis C18-Paraffinsulfonsäure auf 60°C erhitzt. Anschließend wurden 5g Kaliumpersulfat zugegeben Innerhalb von 1 Stunde wurden 41g Styrol zudosiert und anschließend 835g von Styrol und Acrylnitril (Gewichtsverhältnis 75:25) unter Rühren innerhalb von 2 Stunden. Für 2 Stunden wurde die Dispersion anschließend sich selbst überlassen und auf RT abgekühlt. Sodann wurde mittels Calciumchloridlösung bei 95°C gefällt, abgetrennt, mit Wasser gewaschen und im warmen Luftstrom getrocknet. Der Quellungsindex von B-ii wurde zu 8,3 in Toluol bestimmt, die mittlere Teilchengröße von B-ii betrug 1051 nm. Die Teilchengrößenverteilung war eng (Quotient Q=0,12).
V-B-iii: Ein partikelförmiges Propfpolymer aus Poly-n-butylacrylat (Kern) und Styrol/Acrylnitril-Copolymer (Schale) analog DE 195 36 892.
   1230g Wasser wurden unter Stickstoffatmosphäre mit 8,6g Na2HPO4 dodecahydrat und 3,2g NaH2PO4 dodecahydrat als Puffersystem, 1,6g Dilauroyl-peroxid, 100g Polyvinylalkohollösung (Mw = 130.000g), sowie 600g n Butylacrylat und 9g Dihydrodicyclopentadienylacrylat versetzt. Es wird 40 min stark gerührt und auf 73°C hochgeheizt. Hierbei bilden sich Monomeren-tröpfchen. Die Mischung wurde in einen anderen Kessel überführt und dort unter mäßigen Rühren 2 Stunden auf 87°C erhitzt. Anschließend wurde unter mäßigem Rühren bei 70°C im Laufe von 10 Minuten 280g Styrol, 120g Acrylnitril, 0,5g tertiär-Butylperpivalat und 0,5g 2 Ethylhexylthioglycolat hin-zugegeben. Das Reaktionsgemisch wurde bei 70°C für 2 Stunden belassen und anschließend für 2 Stunden auf 85°C hochtemperiert.
   Die Teilchen des so erhaltenen Propfpolymers hatten einen Teilchendurchmesser von 9.4 µm bestimmt mittels Fraunhofer Beugung.
V-B-iv: Ein partikelförmiges Mikrosuspensionspolymer aus Poly-n-butylacrylat (Kern) und Styrol/Acrylnitril-Copolymer (Schale) analog DE 195 36 892.
   1230g Wasser wurden unter Stickstoffatmosphäre mit 200g einer 10%-igen Mowiol® 8-88 Lösung in Wasser (bezogen von Sigma Aldrich), sowie 50g n Butylacrylat, 1g Dihydrodicyclopentadienylacrylat und 0.4g Dilaurylperoxid vorgelegt und bei 7200U/min mit einem Ultra Turrax T65 S5 der Firma Janke & Kunkel bei 75°C anpolymerisiert. Über 200 min wurde 930g n Butylacrylat, 19g Dihydrodicyclopentadienylacrylat und 7,6g Dilaurylperoxid bei 7000 U/min aufpolymerisiert und anschließend 60 min auspolymerisiert. Anschließend wurden weitere 617g Wasser und 551g einer 10%-igen Mowiol® 8-88 Lösung in Wasser zu dem Ansatz gegeben, gefolgt von der Zugabe von 1033g Styrol und 345g Acrylnitril über einen Zeitraum von 140min bei 75°C. Die mittlere Teilchengröße wurde zu 2,8µm bestimmt.
V-B-v: Ein partikelförmiges Propfpolymer aus Poly-n-butylacrylat, dem Acrylsäureester des Tricyclodecenylalkohols und 2-Hydroxyethylacrylat im Kern, sowie Styrol, Acrylnitril und Dimethylaminoethylacrylat in der Schale analog DE 42 42 485.
   1500g Wasser wurden mit 154,4g n Butylacrylat, 3,2g Dihydrodicyclopentadienylacrylat, 1,5g 2-Hydroxyethylacrylat, 5g des Natriumsalzes einer C12-C18 Paraffinsulfonsäure, 3g Kaliumperoxodisulfat, 3g Natriumhydrogencarbonat und 1,5g Natriumpyrophosphat unter Rühren auf 60°C erwärmt. Innerhalb von 3 Stunden wurden bei 60°C weitere 810,6g n Butylacrylat, 16,8g Dihydrodicyclopentadienylacrylat und 12,6g 2-Hydroxyethylacrylat zugeben und für eine Stunde anschließend bei 60°C auspolymerisiert.
   Die hergestellte Emulsion wurde mit 1150g Wasser und 2,7g Kaliumperoxo-disulfat gemischt und unter Rühren auf 65°c erwärmt. Innerhalb von 3 Stun-den wurden 418.3g Styrol, 134.4g Acrylnitril und 7.3g Dimethylaminoethyl-acrylat zudosiert und für weitere 2 Stunden bei 65°C auspolymerisiert. Das Propfpolymer wurde bei mittels Calciumchloridlösung bei 95°C aus der Emulsion gefällt, mit Wasser gewaschen und im warmen Luftstrom getrocknet.

Als Komponente C (bzw. V-C zum Vergleich) wurde eingesetzt:
C-i: Kommerziell erhältliches Titandioxid der Firma Kronos mit der Bezeichnung 2220.
C-ii: ein Verbindung der Formel (I), kommerziell vertrieben von BASF SE unter der Bezeichnung Tinuvin^{®} 770 in einer Konzentration von 0.45% sowie eine Verbindung der Formel (II), kommerziell vertrieben von der BASF SE unter der Bezeichnung Tinuvin^{®} P in einer Konzentration von 0.45%. 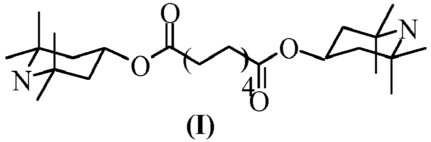 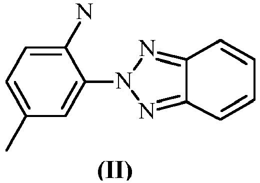
V-C-iii: Polybutylentherephthalat (PBT) mit einer Viskositätszahl von 109 ml/g gemessen in Phenol/o-Dichlorbenzol (1:1) nach ISO 1628-1.

### Herstellung der Formmassen und Formkörper:

Die Komponenten A, B und C (jeweilige Gewichtsteile siehe Tabelle 1) wurden in einem Zweischneckenextruder (ZSK30 von Fa. Werner & Pfleiderer) bei 280°C homogenisiert und in ein Wasserbad extrudiert.
Die Extrudate wurden granuliert und getrocknet. Aus den Granulaten stellte man auf einem Zweischneckenextruder (ZSK25 der Firma Haake) bei 250°C Schmelzetemperatur eine 100µm ± 5µm Folie her und bestimmte die in Tabelle 1 genannten Eigenschaften.

**Tabelle 1: Zusammensetzung und Eigenschaften der Formmassen (vorangestelltes V: zum Vergleich)**

| Beispiel | 1 | 2 | 3 | 4 | 5 | V-6 | V-7 | V-8 | V-9 |
|---|---|---|---|---|---|---|---|---|---|
| Zusammensetzung | | | | | | | | | |
| A-i | 65 | 62 | 61 | 65 | | | 50 | 62 | 70 |
| A-i | | | | | 60 | | | | |
| V-A-iii | | | | | | 92,8 | | | |
| B-i | 17,5 | 17,5 | 17,5 | 14 | 20 | | 40 | | |
| B-i | 17,5 | 17,5 | 17,5 | 21 | 20 | | | | |
| V-B-iii | | | | | | | 10 | | |
| V-B-iv | | | | | | | | 48 | |
| V-B-v | | | | | | | | | 30 |
| C-i | | 3 | 3 | | | 2,6 | | | |
| C-ii | | | 1 | | | | | | |
| V-C-iii | | | | | | 4,6 | | | |
| Durchstoßarbeit [J/mm] | 9 | 7 | 7 | 8 | 9 | 4 | 3 | 4 | 4 |
| Glanz [%] | 22 | 21 | 21 | 20 | 20 | 25 | 24 | 35 | 47 |
| Transmission bei 550nm [%] | 65 | 27 | 28 | 61 | 63 | 22 | 35 | 42 | 53 |

Die in der Tabelle aufgeführten Beispiele belegen, dass die erfindungsgemäßen Formmassen gegenüber den bekannten ASA-Formmassen nochmals verbesserte Durchstoßeigenschaften bei niedrigem Glanz und guter Transmission (verbesserte Einfärbbarkeit) ohne Farbstoff (wie Titandioxid) aufweisen. Die Zusammensetzungen sind jeweils in Gewichtsanteilen gegeben.

## Patentansprüche

1. Thermoplastische Zusammensetzung enthaltend folgende Komponenten:
a) 30 bis 90 Gew.-% eines oder mehrerer Styrolcopolymere, bestehend aus Styrol und/oder α-Methylstyrol, sowie aus Acrylnitril und ggf. weiteren Monomeren, als Komponente A;
b) 10 bis 70 Gew.-% mehrerer schlagzäh-modifizierender Pfropfkautschuke ohne olefinische Doppelbindung in der Kautschukphase, als Komponente B, wobei diese Komponente B enthält:
B1) 1 bis 50 Gew.-% Kautschuk-Partikel, die einen mittleren Teilchendurchmesser von 50 bis 150 nm aufweisen, als Komponente B1;
B2) 50 bis 99 Gew.-% Kautschuk-Partikel, die einen mittleren Teilchendurchmesser von 800 bis 1200 nm aufweisen, als Komponente B2;
c) 0 bis 20 Gew.-% eines oder mehrerer Zusatzstoffe, die von den Komponenten A, B1 und B2 verschieden sind, als Komponente C;
mit der Maßgabe, dass die Gewichtsprozent-Angaben jeweils auf das Gesamtgewicht der Komponenten A bis C bezogen sind, und diese zusammen 100 Gew.-% ergeben.

2. Thermoplastische Zusammensetzung nach Anspruch 1, **dadurch gekennzeichnet, dass** man folgende Komponenten einsetzt:
a) 50 bis 80 Gew.-% eines oder mehrerer Styrolcopolymere, bestehend aus Styrol und/oder α-Methylstyrol, sowie aus Acrylnitril, als Komponente A;
b) 20 bis 50 Gew.-% mehrerer schlagzäh-modifizierender Pfropfkautschuke ohne olefinische Doppelbindung in der Kautschukphase, als Komponente B, wobei diese Komponente B enthält:
B1) 10 bis 50 Gew.-% Kautschuk-Partikel, die einen mittleren Teilchendurchmesservon 50 bis 150 nm aufweisen, als Komponente B1;
B2) 50 bis 90 Gew.-% Kautschuk-Partikel, die einen mittleren Teilchendurchmesser von 800 bis 1200 nm aufweisen, als Komponente B2;
c) 0 bis 20 Gew.-% eines oder mehrerer Zusatzstoffe, die von den Komponenten A, B1 und B2 verschieden sind, als Komponente C.

3. Thermoplastische Zusammensetzung nach Anspruch 1 oder 2, **dadurch gekennzeichnet, dass** man folgende Komponenten einsetzt:
a) 50 bis 80 Gew.-% eines oder mehrerer Styrolcopolymere, bestehend aus Styrol und/oder α-Methylstyrol, sowie aus Acrylnitril, als Komponente A;
b) 20 bis 50 Gew.-% mehrerer schlagzäh-modifizierender Pfropfkautschuke ohne olefinische Doppelbindung in der Kautschukphase, als Komponente B, wobei diese Komponente B enthält:
B1) 10 bis 50 Gew.-% Kautschuk-Partikel, die einen mittleren Teilchendurchmesser von 80 bis 120 nm aufweisen, als Komponente B1;
B2) 50 bis 90 Gew.-% Kautschuk-Partikel, die einen mittleren Teilchendurchmesser von 900 bis 1200 nm aufweisen, als Komponente B2;
c) 0 bis 20 Gew.-% eines oder mehrerer Zusatzstoffe, die von den Komponenten A, B1 und B2 verschieden sind, als Komponente C.

4. Thermoplastische Zusammensetzung nach einem der Ansprüche 1 bis 3, **dadurch gekennzeichnet, dass** man als Komponente A ein Styrolcopolymer einsetzt, bestehend aus:
55 bis 90 Gew.-% Styrol und/oder α-Methylstyrol,
10 bis 45 Gew.-% Acrylnitril,
0 bis 10 Gew.-% weiterer Monomere,
mit der Maßgabe, dass die Gewichtsprozent-Angaben jeweils auf das Gesamtgewicht der Komponente A bezogen sind.

5. Thermoplastische Zusammensetzung nach einem der Ansprüche 1 bis 4, **dadurch gekennzeichnet, dass** man als Komponente A ein Copolymer bestehend aus Styrol und Acrylnitril einsetzt, sowie als Komponente B1 ein Acrylat-Styrol-Acrylnitril (ASA)-Pfropfcopolymer einsetzt, das als polymere Grundlage ein Acrylester-Polymer B11 aufweist sowie eine polymere Auflagen B12 aufweist, wobei die Auflage aus einem vinylaromatischen Monomeren und einem polaren, copolymerisierbaren, ethylenisch ungesättigten Monomeren gebildet wird.

6. Thermoplastische Zusammensetzung nach einem der Ansprüche 1 bis 5, **dadurch gekennzeichnet, dass** man als Komponente B2 ein Acrylat-Styrol-Acrylnitril (ASA)-Pfropfcopolymer einsetzt, das als polymere Grundlage ein Acrylester-Polymer B21 aufweist sowie mindestens drei verschiedene polymere Auflagen B22, B23 und B24 aufweist, wobei die eine Auflage aus einem vinylaromatischen Monomeren und ggf. einem polaren, copolymerisierbaren, ethylenisch ungesättigten Monomeren gebildet wird, und die andere Auflage aus mindestens einem Acrylat-Monomeren gebildet wird, und eine dritte Auflage aus einem vinylaromatischen Monomeren und mindestens einem polaren, copolymerisierbaren, ethylenisch ungesättigten Monomeren gebildet wird.

7. Thermoplastische Zusammensetzung nach einem der Ansprüche 1 bis 6, **dadurch gekennzeichnet, dass** die Pfropfkautschuk-Komponente B1 durch Emulsionspolymerisation hergestellt wird.

8. Thermoplastische Zusammensetzung nach einem der Ansprüche 1 bis 7, **dadurch gekennzeichnet, dass** die Komponente B1 in einer Menge von 10 bis 20 Gew.-% und die Komponente B2 in einer Menge von 10 bis 40 Gew.-% vorhanden sind, jeweils auf das Gesamtgewicht der Komponenten A bis C bezogen.

9. Thermoplastische Zusammensetzung nach einem der Ansprüche 1 bis 8, **dadurch gekennzeichnet, dass** der mittlere Teilchendurchmesser der Pfropfkautschuk-Komponente B1 zwischen 90 bis 110 nm liegt.

10. Thermoplastische Zusammensetzung nach einem der Ansprüche 1 bis 9, **dadurch gekennzeichnet, dass** der mittlere Teilchendurchmesser der Pfropfkautschuk-Komponente B2 zwischen 950 bis 1100 nm liegt.

11. Thermoplastische Zusammensetzung nach einem der Ansprüche 1 bis 10, **dadurch gekennzeichnet, dass** für beide Pfropfkautschuk-Komponenten B1 und B2 als Grundlage ein Alkylacrylat mit C₁- bis C₈-Alkylresten, insbesondere Butylacrylat, und mindestens ein Monomer mit quervernetzenden Eigenschaften eingesetzt wird aus der Gruppe: Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallylisocyanurat, Diallylphthalat, Allylmethacrylat und Dihydrodicyclopentadienylacrylat.

12. Thermoplastische Zusammensetzung nach einem der Ansprüche 1 bis 11, **dadurch gekennzeichnet, dass** man Styrol als vinylaromatische Komponente für die erste polymere Auflage B22 oder die zweite polymere Auflage B23 einsetzt, und dass man ein Alkylacrylat mit C₁- bis C₈-Alkylresten, insbesondere Butylacrylat, sowie mindestens ein Monomer mit quervernetzenden Eigenschaften aus der Gruppe: Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyl-isocyanurat, Diallylphthalat, Allylmethacrylat und Dihydrodicyclopenta-dienylacrylat, für die erste polymere Auflage B22 einsetzt oder die zweite polymere Auflage B23, sowie ggf. die Monomere Styrol und Acrylnitril für eine dritte polymere Auflage B24 von B2 einsetzt.

13. Thermoplastische Zusammensetzung nach einem der Ansprüche 1 bis 12, **dadurch gekennzeichnet, dass** man als Pfropfkautschuk-Komponente B2 ein Acrylat-Styrol-Acrylnitril (ASA)-Pfropfpolymer einsetzt, das als polymere Grundlage ein Polymer B21 aus Butylacrylat und einem Monomer mit quervernetzenden Eigenschaften aus der Gruppe: Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallyl-isocyanurat, Diallylphthalat, Allylmethacrylat und Dihydrodicyclopenta-dienylacrylat, sowie mindestens drei verschiedene polymere Auflagen B22, B23 und B24 aufweist, wobei die erste dieser Auflagen aus Styrol und einem Monomer mit quervernetzenden Eigenschaften aus der o. g. Gruppe, die zweite dieser Auflagen aus Butylacrylat und einem Monomer mit quervernetzenden Eigenschaften aus der o.g. Gruppe, und die dritte dieser Auflagen aus Styrol und Acrylnitril aufgebaut sind.

14. Thermoplastische Zusammensetzung nach einem der Ansprüche 1 bis 13, **dadurch gekennzeichnet, dass** man die Pfropfkautschuk-Komponenten B1 zu B2 im Gewichtsverhältnis von 2:1 bis 1:2 einsetzt, und die Styrolcopolymer-Komponente A zur Pfropfkautschuk-Komponente B1 im Gewichtsverhältnis von 4:1 bis 4:3 einsetzt.

15. Verfahren zur Herstellung einer thermoplastischen Zusammensetzung nach einem der Ansprüche 1 bis 14, **dadurch gekennzeichnet, dass** man die Styrol-Copolymer-Komponenten A durch Lösungspolymerisation oder "Bulkpolymerisation" herstellt, die Pfropfcopolymer-Komponenten B durch Emulsionspolymerisation herstellt, sowie die Komponenten A und B und gegebenenfalls C bei Temperaturen von 100 bis 300°C und einem Druck von 1 bis 50 bar in beliebiger Reihenfolge miteinander vermischt und anschließend extrudiert.

16. Verwendung einer thermoplastischen Zusammensetzung nach einem der Ansprüche 1 bis 14 zur Herstellung von Folien, Formkörpern oder Verbundteilen.

17. Folien, Formkörper oder Verbundteile, enthaltend eine thermoplastische Zusammensetzung nach einem der Ansprüche 1 bis 14.

18. Verfahren zur Herstellung von Verbundteilen aus mindestens einer Schicht bestehend aus einer thermoplastischen Zusammensetzung nach einem der Ansprüche 1 bis 14 und mindestens einer Schicht aus PVC oder ABS.

19. Verbundteil bestehend aus mindestens einer Schicht aus einer thermoplastischen Zusammensetzung nach einem der Ansprüche 1 bis 14 und mindestens einer Schicht aus PVC oder ABS.

20. Verwendung von Verbundteilen nach Anspruch 19 für Gebäudeverkleidungen.

## Claims

1. A thermoplastic composition comprising the following components:
a) 30 to 90 wt% of one or more styrene copolymers composed of styrene and/or α-methylstyrene and of acrylonitrile and optionally further monomers, as component A;
b) 10 to 70 wt% of a plurality of impact-modifying graft rubbers without olefinic double bonding in the rubber phase, as component B, wherein said component B comprises:
B1) 1 to 50 wt% of rubber particles having an average particle diameter of from 50 to 150 nm, as component B1;
B2) 50 to 99 wt% of rubber particles having an average particle diameter of from 800 to 1200 nm, as component B2;
c) 0 to 20 wt% of one or more added substances distinct from components A, B1 and B2, as component C;
with the proviso that the weight percent values are in each case based on the total weight of the components A to C and said components altogether sum to 100 wt%.

2. The thermoplastic composition according to claim 1, **characterized in that** the following components are employed:
a) 50 to 80 wt% of one or more styrene copolymers composed of styrene and/or α-methylstyrene and of acrylonitrile, as component A;
b) 20 to 50 wt% of a plurality of impact-modifying graft rubbers without olefinic double bonding in the rubber phase, as component B, wherein said component B comprises:
B1) 10 to 50 wt% of rubber particles having an average particle diameter of from 50 to 150 nm, as component B1;
B2) 50 to 90 wt% of rubber particles having an average particle diameter of from 800 to 1200 nm, as component B2;
c) 0 to 20 wt% of one or more added substances distinct from components A, B1 and B2, as component C.

3. The thermoplastic composition according to either of claims 1 and 2, **characterized in that** the following components are employed:
a) 50 to 80 wt% of one or more styrene copolymers composed of styrene and/or α-methylstyrene and of acrylonitrile, as component A;
b) 20 to 50 wt% of a plurality of impact-modifying graft rubbers without olefinic double bonding in the rubber phase, as component B, wherein said component B comprises:
B1) 10 to 50 wt% of rubber particles having an average particle diameter of from 80 to 120 nm, as component B1;
B2) 50 to 90 wt% of rubber particles having an average particle diameter of from 900 to 1200 nm, as component B2;
c) 0 to 20 wt% of one or more added substances distinct from components A, B1 and B2, as component C.

4. The thermoplastic composition according to any of claims 1 to 3, **characterized in that** the component A employed is a styrene copolymer composed of:
55 to 90 wt% of styrene and/or α-methylstyrene,
10 to 45 wt% of acrylonitrile,
0 to 10 wt% of further monomers,
with the proviso that the weight percent values are in each case based on the total weight of the component A.

5. The thermoplastic composition according to any of claims 1 to 4, **characterized in that** the component A employed is a copolymer composed of styrene and acrylonitrile and the component B1 employed is an acrylate-styrene-acrylonitrile (ASA) graft copolymer which comprises as the polymeric substrate an acrylic ester polymer B11 and which comprises a polymeric superstrates B12, wherein the superstrate is formed from a vinylaromatic monomer and a polar, copolymerizable, ethylenically unsaturated monomer.

6. The thermoplastic composition according to any of claims 1 to 5, **characterized in that** the component B2 employed is an acrylate-styrene-acrylonitrile (ASA) graft copolymer which comprises as the polymeric substrate an acrylic ester polymer B21 and which comprises at least three different polymeric superstrates B22, B23 and B24, wherein the one superstrate is formed from a vinylaromatic monomer and optionally a polar, copolymerizable, ethylenically unsaturated monomer and the other superstrate is formed from at least one acrylate monomer and a third superstrate is formed from a vinylaromatic monomer and at least one polar, copolymerizable, ethylenically unsaturated monomer.

7. The thermoplastic composition according to any of claims 1 to 6, **characterized in that** the graft rubber component B1 is produced by emulsion polymerization.

8. The thermoplastic composition according to any of claims 1 to 7, **characterized in that** the component B1 is present in an amount of from 10 to 20 wt% and the component B2 is present in an amount of from 10 to 40 wt%, in each case based on the total weight of the components A to C.

9. The thermoplastic composition according to any of claims 1 to 8, **characterized in that** the average particle diameter of the graft rubber component B1 is between 90 to 110 nm.

10. The thermoplastic composition according to any of claims 1 to 9, **characterized in that** the average particle diameter of the graft rubber component B2 is between 950 to 1100 nm.

11. The thermoplastic composition according to any of claims 1 to 10, **characterized in that** both graft rubber components B1 and B2 employ as the substrate an alkyl acrylate comprising C₁ to C₈ alkyl radicals, in particular butyl acrylate, and at least one monomer which has crosslinking properties and is selected from the group: butylene diacrylate, divinylbenzene, butainediol dimethacrylate, trimethylolpropane tri(meth)acrylate, diallyl methacrylate, diallyl maleate, diallyl fumarate, triallyl methacrylate, triallyl isocyanurate, diallyl phthalate, allyl methacrylate and dihydrodicyclopentadienyl acrylate.

12. The thermoplastic composition according to any of claims 1 to 11, **characterized in that** styrene is employed as the vinylaromatic component for the first polymeric superstrate B22 or the second polymeric superstrate B23 and that an alkyl acrylate comprising C₁ to C₈ alkyl radicals, in particular butyl acrylate, and at least one monomer which has crosslinking properties and is selected from the group: butylene diacrylate, divinylbenzene, butainediol dimethacrylate, trimethylolpropane tri(meth)acrylate, diallyl methacrylate, diallyl maleate, diallyl fumarate, triallyl methacrylate, triallyl isocyanurate, diallyl phthalate, allyl methacrylate and dihydrodicyclopentadienyl acrylate, are employed for the first polymeric superstrate B22 or the second polymeric superstrate B23, and optionally the monomers styrene and acrylonitrile are employed for a third polymeric superstrate B24 of B2.

13. The thermoplastic composition according to any of claims 1 to 12, **characterized in that** the graft rubber component B2 employed is an acrylate-styrene-acrylonitrile (ASA) graft polymer comprising as the polymeric substrate a polymer B21 composed of butyl acrylate and of a monomer which has crosslinking properties and is selected from the group: butylene diacrylate, divinylbenzene, butainediol dimethacrylate, trimethylolpropane tri(meth)acrylate, diallyl methacrylate, diallyl maleate, diallyl fumarate, triallyl methacrylate, triallyl isocyanurate, diallyl phthalate, allyl methacrylate and dihydrodicyclopentadienyl acrylate, and at least three different polymeric superstrates B22, B23 and B24, wherein the first of these superstrates is constructed from styrene and a monomer which has crosslinking properties and is selected from the abovementioned group and the second of these superstrates is constructed from butyl acrylate and a monomer which has crosslinking properties and is selected from the abovementioned group and the third of these superstrates is constructed from styrene and acrylonitrile.

14. The thermoplastic composition according to any of claims 1 to 13, **characterized in that** the employed weight ratio of graft rubber component B1 to graft rubber component B2 is from 2:1 to 1:2 and the employed weight ratio of styrene copolymer component A to graft rubber component B1 is from 4:1 to 4:3.

15. A process for producing a thermoplastic composition according to any of claims 1 to 14, **characterized in that** it comprises producing the styrene copolymer components A by solution polymerization or bulk polymerization, producing the graft copolymer components B by emulsion polymerization, and mixing the components A and B and optionally C with one another in any desired order at temperatures of from 100°C to 300°C and a pressure of from 1 to 50 bar and then extruding the mixture.

16. The use of a thermoplastic composition according to any of claims 1 to 14 for producing films/sheets, molded bodies or composite articles.

17. A film/sheet, molded body or composite article comprising a thermoplastic composition according to any of claims 1 to 14.

18. A process for producing composite articles from at least one layer composed of a thermoplastic composition according to any of claims 1 to 14 and at least one layer made of PVC or ABS.

19. A composite article composed of at least one layer made of a thermoplastic composition according to any of claims 1 to 14 and at least one layer made of PVC or ABS.

20. The use of composite articles according to claim 19 for architectural claddings.

## Revendications

1. Composition thermoplastique contenant les composants suivants :
a) en tant que Composant A, 30 à 90 % en poids d'un ou plusieurs copolymères du styrène, constitué de styrène et/ou d'α-méthylstyrène, ainsi que d'acrylonitrile et éventuellement en d'autres monomères ;
b) en tant que Composant B, 10 à 70 % en poids de plusieurs caoutchoucs greffés modifiés choc, sans double liaison oléfinique dans la phase caoutchouc, ce Composant B contenant :
B1) en tant que Composant B1, 1 à 50 % en poids de particules de caoutchouc qui présentent une granulométrie moyenne de 50 à 150 nm ;
B2) en tant que Composant B2, 50 à 99 % en poids de particules de caoutchouc qui présentent une granulométrie moyenne de 800 à 1200 nm ;
c) en tant que Composant C, 0 à 20 % en poids d'un ou plusieurs additifs, qui sont différents des Composants A, B1 et B2 ;
à la condition que chacune des indications de pourcentage en poids soit rapportée au poids total des Composants A à C, et que leur total fasse 100 % en poids.

2. Composition thermoplastique selon la revendication 1, **caractérisée en ce qu'**on utilise les composants suivants :
a) en tant que Composant A, 50 à 80 % en poids d'un ou plusieurs copolymères du styrène, constitué de styrène et/ou d'α-méthylstyrène, ainsi que d'acrylonitrile ;
b) en tant que Composant B, 20 à 50 % en poids de plusieurs catalyseurs greffés modifiés choc sans double liaison oléfinique dans la phase caoutchouc, ce Composant B contenant :
B1) en tant que Composant B1, 10 à 50 % en poids de particules de caoutchouc qui présentent une granulométrie moyenne de 50 à 150 nm ;
B2) en tant que Composant B2, 50 à 90 % en poids de particules de caoutchouc qui présentent une granulométrie moyenne de 800 à 1200 nm ;
c) en tant que Composant C, 0 à 20 % en poids d'un ou plusieurs additifs qui sont différents des Composants A, B1 et B2.

3. Composition thermoplastique selon la revendication 1 ou 2, **caractérisée en ce qu'**on utilise les composants suivants :
a) en tant que Composant A, 50 à 80 % en poids d'un ou plusieurs copolymères du styrène, constitué de styrène et/ou d'α-méthylstyrène, ainsi que d'acrylonitrile ;
b) en tant que Composant B, 20 à 50 % en poids de plusieurs caoutchoucs greffés modifiés choc sans double liaison oléfinique dans la phase caoutchouc, ce Composant B contenant :
B1) en tant que Composant B1, 10 à 50 % en poids de particules de caoutchouc qui présentent une granulométrie moyenne de 80 à 120 nm ;
B2) en tant que Composant B2, 50 à 90 % en poids de particules de caoutchouc qui présentent une granulométrie moyenne de 900 à 1200 nm ;
c) en tant que Composant C, 0 à 20 % en poids d'un ou plusieurs additifs qui sont différents des Composants A, B1 et B2.

4. Composition thermoplastique selon l'une des revendications 1 à 3, **caractérisée en ce qu'**on utilise en tant que Composant A un copolymère du styrène csonstitué de :
55 à 90 % en poids de styrène et/ou d'α-méthylstyrène,
10 à 45 % en poids d'acrylonitrile,
0 à 10 % en poids d'autres monomères,
à la condition que chacun des pourcentages en poids soit rapporté au poids total du Composant A.

5. Composition thermoplastique selon l'une des revendications 1 à 4, **caractérisée en ce qu'**on utilise en tant que Composant A un copolymère constitué de styrène et d'acrylonitrile, ainsi qu'en tant que Composant B1 un copolymère greffé acrylate-styrène-acrylonitrile (ASA), qui en tant que base polymère comprend un polymère d'acrylate B11 ainsi qu'un greffon polymère B12, le greffon étant formé d'un monomère vinylaromatique et d'un monomère polaire copolymérisable à insaturation éthylénique.

6. Composition thermoplastique selon l'une des revendications 1 à 5, **caractérisée en ce qu'**on utilise en tant que Composant B2 un copolymère greffé acrylate-styrène-acrylonitrile (ASA), qui en tant que base polymère comprend un polymère d'acrylate B21 ainsi qu'au moins trois greffons polymères différents B22, B23 et B24, l'un des greffons étant formé d'un monomère vinylaromatique et éventuellement d'un monomère polaire copolymérisable à insaturation éthylénique, et l'autre greffon étant formé d'au moins un monomère acrylate, et un troisième greffon étant formé d'un monomère vinylaromatique et d'au moins un monomère polaire copolymérisable à insaturation éthylénique.

7. Composition thermoplastique selon l'une des revendications 1 à 6, **caractérisée en ce que** le Composant caoutchouc greffé B1 est fabriqué par polymérisation en émulsion.

8. Composition thermoplastique selon l'une des revendications 1 à 7, **caractérisée en ce que** le Composant B1 est présent en une quantité de 10 à 20 % en poids et le Composant B2 en une quantité de 10 à 40 % en poids, dans chaque cas par rapport au poids total des Composants A à C.

9. Composition thermoplastique selon l'une des revendications 1 à 8, **caractérisée en ce que** la granulométrie moyenne du Composant caoutchouc greffé B1 est comprise entre 90 et 110 nm.

10. Composition thermoplastique selon l'une des revendications 1 à 9, **caractérisée en ce que** la granulométrie moyenne du Composant caoutchouc greffé B2 est comprise entre 950 et 1100 nm.

11. Composition thermoplastique selon l'une des revendications 1 à 10, **caractérisée en ce qu'**on utilise pour les deux Composants caoutchouc greffé B1 et B2 en tant que base un acrylate d'alkyle comprenant des radicaux alkyle en C₁ à C₈, en particulier l'acrylate de butyle, et au moins un monomère présentant des propriétés de réticulation croisée, choisi dans le groupe consistant en le diacrylate de butylène, le divinylbenzène, le diméthacrylate de butanediol, le tri(méth)acrylate de triméthylolpropane, le méthacrylate de diallyle, le maléate de diallyle, le fumarate de diallyle, le méthacrylate de triallyle, l'isocyanurate de triallyle, le phtalate de diallyle, le méthacrylate d'allyle et l'acrylate de dihydrodicyclopentadiényle.

12. Composition thermoplastique selon l'une des revendications 1 à 11, **caractérisée en ce qu'**on utilise du styrène en tant que composant vinylaromatique pour le premier greffon polymère B22 ou le deuxième greffon polymère B23, et qu'on utilise pour le premier greffon polymère B22 au moins un acrylate d'alkyle comprenant des radicaux alkyle en C₁ à C₈, en particulier l'acrylate de butyle, ainsi qu'au moins un monomère ayant des propriétés de réticulation croisée, choisi dans le groupe consistant en le diacrylate de butylène, le divinylbenzène, le diméthacrylate de butanediol, le tri(méth)acrylate de triméthylolpropane, le méthacrylate de diallyle, le maléate de diallyle, le fumarate de diallyle, le méthacrylate de diallyle, l'isocyanurate de triallyle, le phtalate de diallyle, le méthacrylate d'allyle et l'acrylate de dihydrodicyclopentadiényle, ou que l'on utilise pour un troisième greffon polymère B24 de B2 le deuxième greffon polymère B23, ainsi qu'éventuellement les monomères styrène et acrylonitrile.

13. Composition thermoplastique selon l'une des revendications 1 à 12, **caractérisée en ce qu'**on utilise en tant que composant caoutchouc greffé B2 un polymère greffé acrylate-styrène-acrylonitrile (ASA), qui comprend en tant que base polymère un polymère B21 d'acrylonitrile et d'un monomère ayant des propriétés de réticulation croisée, choisi dans le groupe consistant en le diacrylate de butylène, le divinylbenzène, le diméthacrylate de butanediol, le tri(méth)acrylate de triméthylolpropane, le méthacrylate de diallyle, le maléate de diallyle, le fumarate de diallyle, le méthacrylate de diallyle, l'isocyanurate de triallyle, le phtalate de diallyle, le méthacrylate d'allyle et l'acrylate de dihydrodicyclopentadiényle, ainsi qu'au moins trois greffons polymères différents B22, B23 et B24, le premier de ces greffons étant constitué de styrène et d'un monomère ayant des propriétés de réticulation croisée du groupe ci-dessus, le deuxième de ces greffons étant constitué d'acrylate de butyle et d'un monomère ayant des propriétés de réticulation croisée du groupe ci-dessus, et le troisième de ces greffons étant constitué de styrène et d'acrylonitrile.

14. Composition thermoplastique selon l'une des revendications 1 à 13, **caractérisée en ce qu'**on utilise les Composants caoutchouc greffé B1 à B2 selon un rapport en poids de 2:1 à 1:2, et qu'on utilise le Composant copolymère du styrène A selon un rapport en poids, par rapport au Composant caoutchouc greffé B1, de 4:1 à 4:3.

15. Procédé de fabrication d'une composition thermoplastique selon l'une des revendications 1 à 14, **caractérisé en ce qu'**on fabrique le Composant copolymère du styrène A par polymérisation en solution ou par "polymérisation en masse", on fabrique le Composant copolymère greffé B par polymérisation en émulsion, et on mélange les uns aux autres dans un ordre quelconque les Composants A et B et éventuellement C à des températures de 100 à 300°C et sous une pression de 1 à 50 bar, puis on les extrude.

16. Utilisation d'une composition thermoplastique selon l'une des revendications 1 à 14 pour la fabrication de feuilles, d'objets moulés ou de pièces composites.

17. Feuilles, objets moulés ou pièces composites contenant une composition thermoplastique selon l'une des revendications 1 à 14.

18. Procédé de fabrication de pièces composites à partir d'au moins une couche consistant en une composition thermoplastique selon l'une des revendications 1 à 14 et d'au moins une couche de PVC ou d'ABS.

19. Pièce composite consistant en au moins une couche d'une composition thermoplastique selon l'une des revendications 1 à 14 et au moins une couche de PVC ou d'ABS.

20. Utilisation de pièces composites selon la revendication 19 pour des revêtements de bâtiments.
